# EUROPÄISCHE PATENTSCHRIFT

(11) **EP 1 476 615 B1**
(45) Veröffentlichungstag und Bekanntmachung des Hinweises auf die Patenterteilung: **17.05.2006**
(21) Anmeldenummer: 02700259.1
(22) Anmeldetag: 20.02.2002
(51) Int. Cl.: E04F 15/04

(54) **PANEEL, INSBESONDERE FUSSDODENPANEEL**
PANEL, IN PARTICULAR FLOORING PANEL
PANNEAU, EN PARTICULIER PANNEAU DE REVETEMENT DE SOL

(30) Priorität: 18.02.2002 DE 10206877
(43) Veröffentlichungstag der Anmeldung: 17.11.2004
(73) Patentinhaber: E.F.P. Floor Products Fussböden GmbH, 6380 St. Johann in Tirol (AT)
(72) Erfinder: PLETZER, Stefan, A-6382 Kirchdorf (AT); WEBER, Jürgen, 59469 Ense (DE); HEITZINGER, Johann, A-6380 St. Johann in Tirol (AT)
(74) Vertreter: Rox, Thomas
(86) Internationale Anmeldenummer: PCT/EP2002/001807
(87) Internationale Veröffentlichungsnummer: WO 2003/069094

(56) Entgegenhaltungen:
- DE-A- 10 001 248
- DE-A- 10 038 662
- DE-U- 20 022 062
- FR-A- 2 808 826

## Beschreibung

Die Erfindung betrifft ein Paneel, insbesondere ein Fußbodenpaneel, das mechanisch mit anderen Paneelen verriegelt werden kann, mit einer ersten Seitenkante und mit einer zweiten Seitenkante, die der ersten Seitenkante gegenüberliegend angeordnet ist, wobei die Seitenkanten mit korrespondierenden Seitenkanten weiterer Paneelen verriegelbar sind und wobei die Seitenkanten obere, im wesentlichen senkrecht zur Oberseite des Paneels verlaufende Seitenflächen aufweisen, mit einer an der ersten Seitenkante ausgebildeten Nut, die von einer oberen Lippe und einer unteren Lippe begrenzt wird und sich parallel zur ersten Seitenkante erstreckt und mit einer an der zweiten Seitenkante ausgebildeten Feder, die sich parallel zur zweiten Seitenkante erstreckt, wobei im verriegelten Zustand die oberen Seitenflächen aneinander anliegen und die Unterseite der oberen Lippe an der Oberseite der Feder und die Oberseite der unteren Lippe an der Unterseite der Feder anliegen und wobei eine Verriegelungslippe an der ersten Seitenkante beabstandet zur unteren Lippe vorgesehen ist, wobei die Verriegelungslippe eine schräg zur Unterseite des Paneels verlaufende Verriegelungsfläche aufweist. Eine Verriegelungsfeder ist an der zweiten Seitenkante beabstandet zur Feder vorgesehen, wobei die Verriegelungsfeder eine schräg zur Unterseite des Paneels verlaufende Verriegelungsfläche aufweist.

Derartige Paneelen werden für einen Bodenbelag, beispielsweise Parkett oder Laminatfußboden, oder auch für Decken- und Wandverkleidungen verwendet. Die verwendeten Materialien können demnach Holz, Holzwerkstoffe, insbesondere Spanplatten, MDF-Platten und HDF-Platten, oder auch Kunststoffe sein.

Für die Anwendungen lassen sich die einzelnen Paneelen durch eine mechanische Verbindung, d. h. Verriegelung, zu einer flächigen Gesamtheit vereinen, so daß ein Verlegen der Paneelen ohne Klebstoffe oder zusätzliche mechanische Befestigungselemente, z. B. Schrauben oder Nägel, möglich ist. Insbesondere ergibt sich daraus der Vorteil, daß die Paneelen sich ohne ein Verleimen verlegen und somit wieder entfernen lassen können.

Aus dem Stand der Technik der WO 98/24995 ist ein Paneel bekannt, das einerseits mit einer Nut-Feder-Verbindung für eine vertikale Verriegelung der Paneelen zueinander und andererseits mit einer aus einer Aluminiumschiene versehen ist, die mit einer entsprechende Ausnehmung in der Seitenkante des anderen Paneels verrastet und somit eine horizontale Verriegelung der Paneelen bewirkt. Die Unterseite der Nut und die Oberseite der Feder sind dabei im wesentlichen parallel zur Oberseite des Paneels ausgerichtet, so dass eine genaue vertikale Passung der Paneelen zueinander erreicht wird.

Aus dem weiteren Stand der Technik der WO 01/66876 sowie der WO 01/48331 sind Weiterentwicklungen dieses Profils bekannt, bei denen die Nut-Feder-Verbindung und eine Verriegelungslippe und eine Verriegelungsfeder für die horizontale Verriegelung einstückig aus dem Material des Paneels hergestellt sind. Dazu ist die Verriegelungslippe an der Seitenkante mit der Feder der Nut-Feder-Verbindung und die Verriegelungsfeder an der Seitenkante der Nut der Nut-Feder-Verbindung ausgebildet. Somit stellt also die Verriegelungsfeder gleichzeitig auch die untere Lippe der Nut dar, weist also eine doppelte Funktion auf.

Bei beiden Varianten ist die Verriegelungslippe das einzige Element, dass während des Zusammenfügens elastisch verformt wird, um ein Verrasten der Verriegelungslippe mit der Verriegelungsfeder zu ermöglichen. Denn die Oberseite der Verriegelungsfeder liegt an der Unterseite der unteren Lippe der Nut an und kann sich somit nicht nach oben verbiegen. Die Verbiegung der Verriegelungslippe führt zu Beschädigungen in der Struktur des Paneels, insbesondere zu feinen Rissen im Bereich des paneelseitigen Endes der Verriegelungslippe, die insgesamt eine Schwächung der mechanischen Verriegelung der Paneelen miteinander führen.

Auch aus DE-A-10001248 ist ein gattungsgemaβes paneel bekannt.

Der vorliegenden Erfindung liegt daher das technische Problem zugrunde, ein Paneel der gattungsgemäßen Art anzugeben, mit dem die zuvor beschriebenen Nachteile zumindest teilweise vermieden werden.

Das zuvor aufgezeigte technische Problem wird erfindungsgemäß durch ein Paneel gemäß Anspruch 1 gelöst.

Die Lösung besteht darin, dass im verriegelten Zustand die Verriegelungsfläche der Verriegelungslippe an der Verriegelungsfläche der Verriegelungsfeder an leigt und zwischen der Oberseite der Verriegelungsfeder und der Unterseite der unteren Lippe ein Zwischenraum vorgesehen ist.

Die Verriegelungsfeder ist also an der gleichen Seitenkante wie die Feder der Nut-Feder-Verbindung ausgebildet, während die Verriegelungslippe an der gleichen anderen Seitenkante wie die Nut der Nut-Feder-Verbindung ausgebildet ist.

Der Zwischenraum zwischen der Verriegelungsfeder und der Unterseite der unteren Lippe führt dazu, dass sich zusätzlich zur Verriegelungslippe auch die Verriegelungsfeder während des Verbindens elastisch nach oben verformen kann. Dadurch wird die Verriegelungslippe entlastet und die Gefahr einer Beschädigung des Materials des Paneels wird verringert, wenn nicht sogar verhindert.

Darüber hinaus ermöglicht der Zwischenraum im verriegelten Zustand eine Relativbewegung der Nut-Feder-Verbindung einerseits und der Verriegelungslippe und der Verriegelungsfeder andererseits, wenn eine mechanische Belastung der Paneelen im Bereich der beiden Seitenkanten erfolgt. Somit werden auch Beschädigungen der Verriegelungselemente im verriegelten Zustand vermieden.

Somit wird erstmals ein Profil angegeben, bei dem bei einer einstückigen Ausführung der Verriegelungselemente eine vollständige Trennung zwischen der Nut-Feder-Verbindung einerseits und der Verriegelungslippe und der Verriegelungsfeder andererseits vollzogen ist. Mit anderen Worten findet bei dem erfindungsgemäßen Paneel eine vollständig Trennung der vertikalen und horizontalen Verriegelung statt, da sämtliche Elemente der vertikalen Verriegelung von den Elementen der horizontalen Verriegelung verschieden sind.

Die Größe des Zwischenraumes ist nicht von wesentlicher Bedeutung, denn es kommt im wesentlichen nur auf dessen Wirkung an, nämlich keine Passung zwischen der Oberseite der Verriegelungsfeder und der Unterseite der unteren Lippe zu verwirklichen. Käme es zu einer Passung, also zu einem engen Anliegen auch an dieser Stelle, so läge eine Doppelpassung vor, die technisch aufgrund der Herstellungstoleranzen schwer zuverlässig zu realisieren wäre und die in Konkurrenz zur oberhalb ausgebildeten Nut-Feder-Verbindung stünde. Ein Zwischenraum ist also bereits dann vorhanden, wenn kein enges Aneinanderliegen vorliegt, also ein Anpressen der Verriegelungsfeder unter geringer Verbiegung an die untere Lippe möglich ist. Der Zwischenraum ist daher größer 0,05 mm, bevorzugt größer als 0,1 mm und insbesondere größer als 0,5 mm.

Im Vergleich zum Stand der Technik ist bei der erfindungsgemäßen Ausgestaltung eine zusätzliche Stufe oder Ebene in das Profil eingearbeitet, die einen zusätzliche Schutz vor einem Eindringen von Feuchtigkeit bietet.

In weiter bevorzugter Weise ist im verriegelten Zustand zwischen dem distalen Ende der Verriegelungsfeder und der zwischen der unteren Lippe der Nut und der Verriegelungslippe begrenzten Vertiefung ebenfalls ein Zwischenraum vorgesehen. Dieser Zwischenraum unterstützt die zuvor erläuterte Trennung, da die Verriegelungsfeder im wesentlichen nur mit ihrer Unterseite an der Verriegelungslippe anliegt.

Darüber hinaus ist es bevorzugt, dass sich das distale Ende der Verriegelungsfeder über das distale Ende der Feder hinaus erstreckt. Dadurch kann beim Zusammenfügen der Paneelen die Schlagkraft allein auf das distale Ende der Verriegelungsfeder ausgeübt werden, wodurch alle anderen vorstehenden Elemente beider Seitenkanten geschont werden. Denn insbesondere die obere Seitenfläche der ersten Paneele, die einen Teil der sichtbaren Stoßkante zwischen beiden Paneelen bildet, aber auch die Elemente der Nut-Feder-Verbindung werden der aufgebrachten Schlagkraft nicht ausgesetzt und bleiben somit unverformt.

Es wird also durch die beschriebene Ausgestaltung des Kantenprofils sichergestellt, dass die Elemente, deren genaue Form wesentlich für eine exakte Passung der Paneelen zueinander verantwortlich ist, unverletzt bleiben. Dagegen kann es bei der Verriegelungsfeder durch die Schlagkraft durchaus zu einer Verformung kommen, ohne dass dadurch die Passgenauigkeit beeinträchtigt wird. Denn der Zwischenraum zwischen der Verriegelungsfeder und der unteren Lippe der Nut erlaubt eine Verformung des vorderen Bereiches der Verriegelungsfeder. Mit anderen Worten ermöglicht die vollständige Trennung der Elemente der vertikalen und der horizontalen Verriegelung auch ein sicheres Verbinden der Paneelen miteinander, weil während des Zusammenfügens auftretende Verformungen der Seitenkante nicht die Passgenauigkeit beeinträchtigen.

Bei einer weiteren bevorzugten Ausgestaltung der vorliegenden Erfindung ist am unteren Ende der oberen Seitenfläche der ersten Seitenkante eine vorstehende Rippe und am unteren Ende der oberen Seitenfläche der zweiten Seitenkante eine Vertiefung vorgesehen. Im verriegelten Zustand steht dann die Rippe mit der Vertiefung im Eingriff. Somit wird die exakte Position des vorderen Endes der oberen Lippe definiert, wodurch ein durch eine Belastung der Paneelen im Bereich der Seitenkanten oder durch Eindringen von Feuchtigkeit entstehendes Aufstellen der oberen Lippe vermindert oder sogar verhindert wird.

Das Merkmal der zusätzlichen Rippe und der zusätzlichen Vertiefung ist unabhängig von der bisher beschriebenen Ausgestaltung des Kantenprofils und kann bei anderen Nut-Feder-Verbindungen mit oder ohne mechanische Verriegelung angewendet werden.

Bei einer weiteren Ausführungsform der vorliegenden Erfindung kann im verriegelten Zustand der Grund der zwischen der unteren Lippe der Nut und der Verriegelungslippe begrenzten Vertiefung über die durch die obere Seitenfläche der ersten Seitenkante definierte senkrechte Ebene hinaus vorstehen.

Diese Ausgestaltung hat einerseits den Vorteil, dass die auf die Paneelen im Bereich der Seitenkanten ausgeübten Kräfte nicht direkt nach unten auf die Elemente der horizontalen Verriegelungselemente weitergeleitet werden. Im Gegenteil ist direkt unterhalb der Seitenkante ein Bereich mit vollem Material, also ein Bereich ohne Vertiefungen angeordnet, so daß ausgeübte Kräfte nicht direkt zu einer Verformung der elastischen Elemente der horizontalen Verriegelung führen. Andererseits besteht der Vorteil darin, dass die Unterseite der Feder und die Oberseite der unteren Lippe stark verlängert sind und eine ausgedehnte Anlagefläche bilden.

Schließlich ist bei einer weiteren bevorzugten Ausführungsform der vorliegenden Erfindung weist das vordere Ende der Verriegelungsfeder eine vergrößerte äußere Form auf, die im verriegelten Zustand mit Passung an dem grundseitige Ende der zwischen der unteren Lippe und der Verriegelungslippe begrenzten Vertiefung anliegt, wobei das vordere Ende der Verriegelungsfeder nur in dem Bereich anliegt, der im Material des Paneels innerhalb des Grundes der Nut angeordnet ist. Daher wird der Zwischenraum zwischen der Verriegelungsfeder und der unteren Lippe der Nut und somit auch die Bewegungsfreiheit der Verriegelungsfeder nicht eingeschränkt. Die Passung am distalen Ende der Verriegelungsfeder führt jedoch zu einer besseren Stabilität der horizontalen Verriegelung.
Die eigentliche Nut-Feder-Verbindung wird dadurch auch nicht beeinflusst, da die horizontale Erstreckung der Passung der Nut-Feder-Verbindung getrennt von der horizontalen Erstreckung der Passung am distalen Ende der Verriegelungsfeder innerhalb des Profils der Kanten angeordnet sind. Es kommt also nicht zu einer Doppelpassung in diesem Bereich.

Im folgenden wird die Erfindung im Rahnen der Patentansprüche anhand von Ausführungsbeispielen näher erläutert, wozu auf die beigefügte Zeichnung Bezug genommen wird. In der Zeichnung zeigen
- Fig. 1: ein erstes Ausführungsbeispiel eines Kantenprofils eines erfindungsgemäßen Paneels im verriegelten Zustand,
- Fig. 2: die Kantenprofile des Paneels gemäß Fig. 1 im nicht verriegelten Zustand,
- Fig. 3: ein zweites Ausführungsbeispiel eines Kantenprofils eines erfindungsgemäßen Paneels im verriegelten Zustand,
- Fig. 4: die Kantenprofile des Paneels gemäß Fig. 2 im nicht verriegelten Zustand,
- Fig. 5: ein drittes Ausführungsbeispiel eines Kantenprofils eines erfindungsgemäßen Paneels im verriegelten Zustand,
- Fig. 6: die Kantenprofile des Paneels gemäß Fig. 5 im nicht verriegelten Zustand.
- Fig. 7: ein viertes Ausführungsbeispiel eines Kantenprofils eines erfindungsgemäßen Paneels im verriegelten Zustand und
- Fig. 8: die Kantenprofile des Paneels gemäß Fig. 5 im nicht verriegelten Zustand.

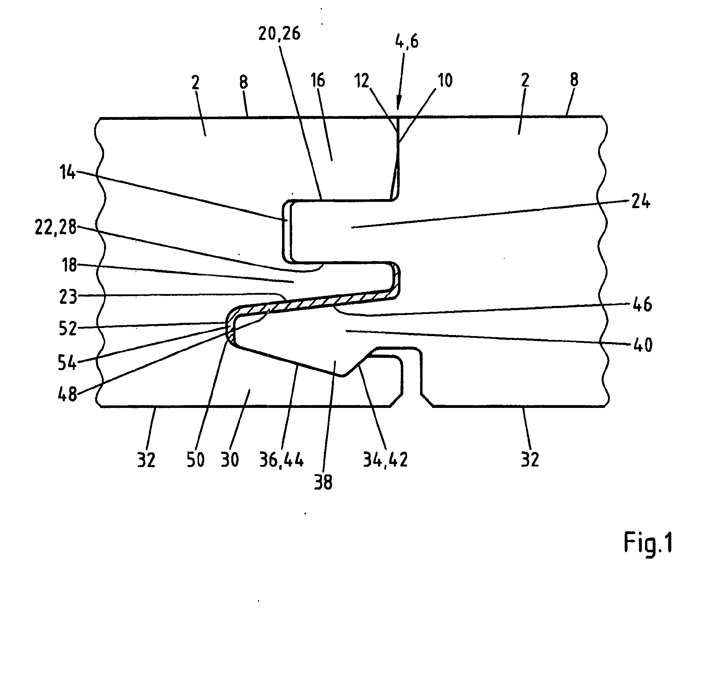

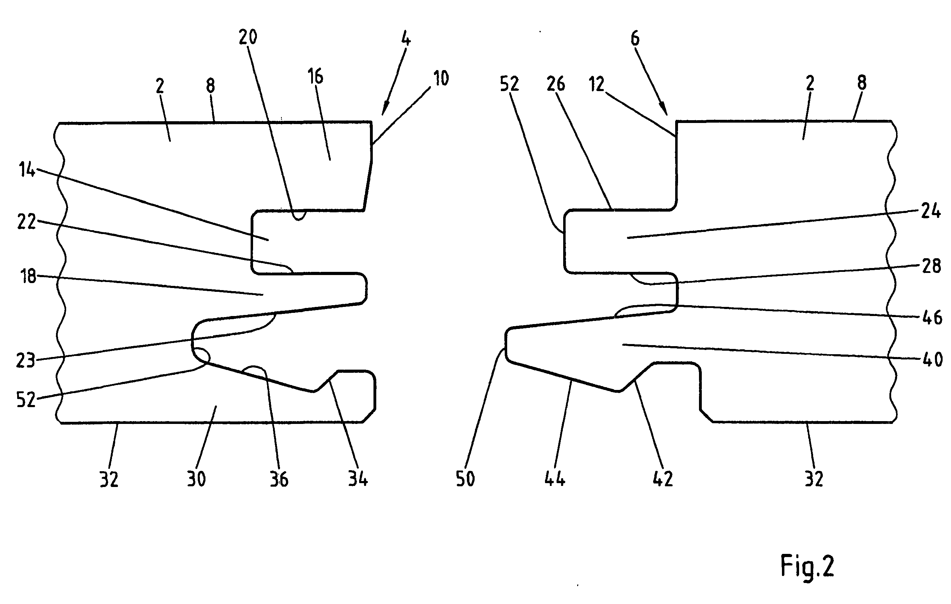

In den Fig. 1 und 2 sind die Kantenprofile eines ersten Ausführungsbeispiels eines erfindungsgemäßen Paneels 2 dargestellt. Jedes Paneel 2 weist an einander gegenüberliegenden Seitenkanten 4 und 6 korrespondierende Kantenprofile auf, so dass eine Mehrzahl von Paneelen 2 zu einer Gesamtheit, beispielsweise zu einem Fußboden, miteinander verriegelt und verbunden werden können. Um das Zusammenwirken der korrespondierenden Kantenprofile besser beschreiben zu können, werden jeweils zwei Paneele 2 ausschnittsweise im Bereich der Seitenkanten 4 bzw. 6 dargestellt.

Die erste Seitenkante 4 und die zweite Seitenkante 6 weisen obere, im wesentlichen senkrecht zur Oberseite 8 des Paneels 2 verlaufende Seitenflächen 10 und 12 auf. Die Seitenflächen 10 und 12 definieren die horizontale Relativlage im verbundenen Zustand zweier Paneele 2. Mit anderen Worten, die Paneelen 2 stoßen an den Seitenflächen 10 und 12 im verriegelten und verbundenen Zustand aneinander an.

An der ersten Seitenkante 4 ist eine Nut 14 ausgebildet, die von einer oberen Lippe 16 und einer unteren Lippe 18 begrenzt wird und sich parallel zur ersten Seitenkante 4 erstreckt. Die obere Lippe 16 weist eine der Nut 14 zugewandte Unterseite 20 und die untere Lippe 18 eine der Nut 14 zugewandte Oberseite 22 auf. Schließlich weist die untere Lippe 18 eine Unterseite 23 auf.

Des weiteren ist an der zweiten Seitenkante 6 eine Feder 24, die sich parallel zur zweiten Seitenkante 6 erstreckt und eine Oberseite 26 sowie eine Unterseite 28 aufweist.

Im verriegelten Zustand der beiden Paneelen 2 liegen die Unterseite 20 der oberen Lippe 16 an der Oberseite 26 der Feder 24 und die Oberseite 22 der unteren Lippe 18 an der Unterseite 28 der Feder 24 an. Somit wird eine Nut-Feder-Verbindung mit Passung erreicht, die eine vertikale Verriegelung und somit eine vertikale Justierung der Paneelen 2 zueinander bewirkt.

Eine Verriegelungslippe 30 ist weiterhin an der ersten Seitenkante 4 beabstandet zur unteren Lippe 18 vorgesehen, wobei die Verriegelungslippe 30 eine schräg zur Unterseite 32 des Paneels 2 verlaufende Verriegelungsfläche 34 aufweist. Schräg bedeutet dabei, dass zumindest eine vertikale Komponente in der Ausrichtung der Verriegelungsfläche 34 vorhanden ist, da diese eine horizontale Verriegelung der Paneelen 2 miteinander bewirken soll. Es ist auch denkbar, dass die Verriegelungsfläche im wesentlichen senkrecht zur Unterseite 32 ausgerichtet ist, jedoch ist eine unter einem Winkel von weniger als 90° ausgerichtete Anordnung der Verriegelungsfläche 34 bevorzugt.

Die Verriegelungslippe 30 weist daneben auch eine Anlagefläche 36 auf, die ebenfalls schräg zur Unterseite 32 verläuft, jedoch eine entgegengesetzte Neigung relativ zur Verriegelungsfläche 34 aufweist. Zusammen wird von beiden Flächen 34 und 36 ein Verriegelungselement 38 gebildet.

Dazu korrespondierend ist eine Verriegelungsfeder 40 an der zweiten Seitenkante 6 beabstandet zur Feder 24 vorgesehen, wobei die Verriegelungsfeder 40 eine schräg zur Unterseite 32 des Paneels 2 verlaufende Verriegelungsfläche 42 aufweist. Daneben ist eine weitere Anlagefläche 44 vorgesehen. Die beiden Flächen 42 und 44 entsprechen in ihrer Ausrichtung der Ausrichtung der beiden Flächen 34 und 36 der Verriegelungslippe 30.

Im verriegelten Zustand liegt dann die Verriegelungsfläche 34 der Verriegelungslippe 30 an der Verriegelungsfläche 42 der Verriegelungsfeder 40 an und zwischen der Oberseite 46 der Verriegelungsfeder 40 und der Unterseite 23 der unteren Lippe 18 ist ein Zwischenraum 48 vorgesehen. Der Zwischenraum 48 ermöglicht es, dass die Verriegelungsfeder 40 während des Zusammenfügens der Paneelen 2 nach oben ausweichen kann und somit nicht nur die Verriegelungslippe 30 als einziges Element den Dickenausgleich beim Einführen des Verriegelungselementes 38 elastisch verformt werden muss.

Im verriegelten Zustand ist weiterhin zwischen dem distalen Ende 50 der Verriegelungsfeder 40 und dem Grund 52 der zwischen der unteren Lippe 18 der Nut 14 und der Verriegelungslippe 30 begrenzten Vertiefung ein Zwischenraum 54 vorgesehen. Dadurch wird die Bewegungsfreiheit der Verriegelungsfeder 40 weiter vergrößert.

Weiterhin zeigen die Fig. 1 und 2, dass sich das distale Ende 50 der Verriegelungsfeder 40 über das distale Ende 52 der Feder 24 hinaus erstreckt. Somit kann das distale Ende 50 der Verriegelungsfeder 40 als Angriffspunkt für eine Schlagkraft während des Zusammenfügens dienen, während die anderen vorstehenden Elemente keiner Kraft ausgesetzt sind und somit beim Zusammenfügen nicht durch die Schlagkraft verformt werden.

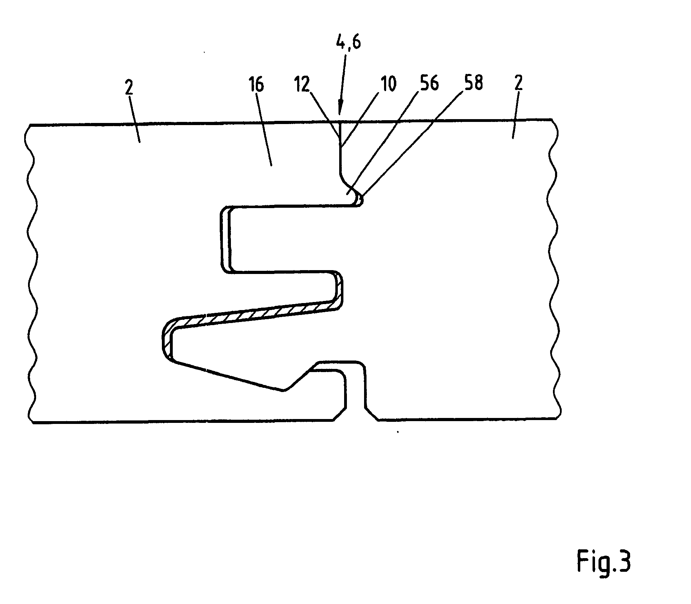

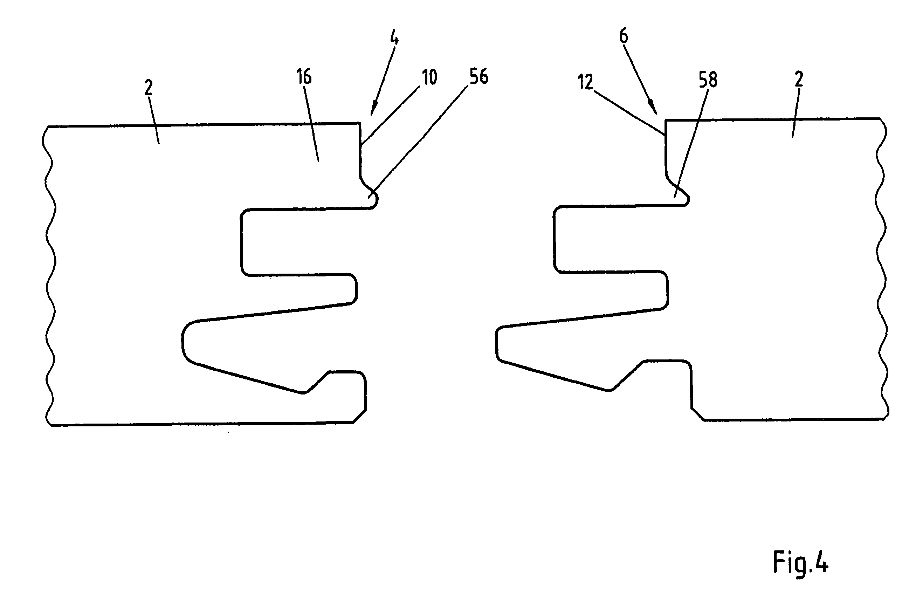

In den Fig. 3 und 4 ist ein zweites Ausführungsbeispiel der vorliegenden Erfindung dargestellt. Dabei sind gleiche Bezugszeichen für gleiche Bauteile verwendet worden. Da der Unterschied dieser Ausführungsform gegenüber der in den Fig. 1 und 2 gezeigten Ausführungsform nur in einem Detail der oberen Lippe 16 besteht, sind nicht alle bisherigen Bezugszeichen eingezeichnet worden.

Der Unterschied besteht darin, dass am unteren Ende der oberen Seitenfläche 10 der ersten Seitenkante 4 eine vorstehende Rippe 56 vorgesehen ist und dass am unteren Ende der oberen Seitenfläche 12 der zweiten Seitenkante 6 eine Vertiefung 58 vorgesehen ist. Die Formen der Rippe 56 und der Vertiefung 58 sind zumindest teilweise aneinander angepasst, so dass im verriegelten Zustand die Rippe 56 mit der Vertiefung 58 im Eingriff steht. Dadurch wird verhindert, dass sich die obere Lippe 16 am Ende des Zusammenfügens der Paneelen 2 oder im Lauf der Zeit durch eine Belastung der Paneelen 2 im Bereich der Seitenkanten 4 und 6 aufstellt und eine Kante entsteht.

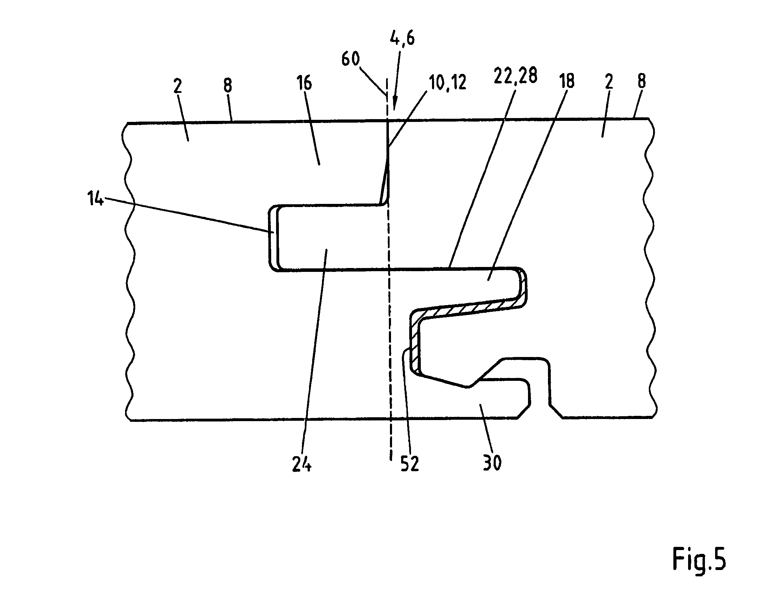

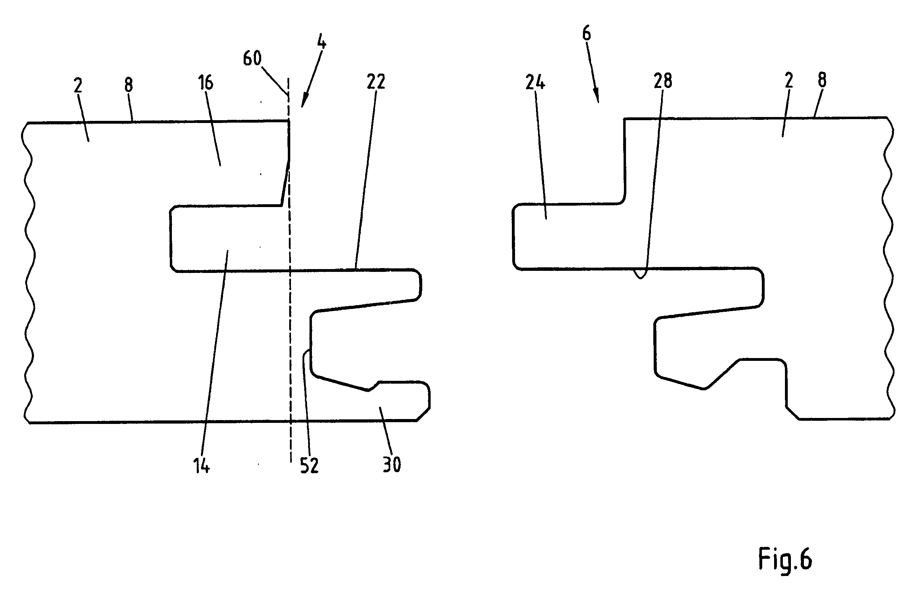

In den Fig. 5 und 6 ist ein drittes Ausführungsbeispiel der vorliegenden Erfindung dargestellt. Dabei sind gleiche Bezugszeichen für gleiche Bauteile verwendet worden, auch wenn diese unterschiedlich dimensioniert sind.

Der Unterschied zum ersten Ausführungsbeispiel besteht vor allem darin, dass im verriegelten Zustand der Grund 52 der zwischen der unteren Lippe 18 der Nut 14 und der Verriegelungslippe 30 begrenzten Vertiefung über die durch die obere Seitenfläche 10 der ersten Seitenkante 4 definierte senkrechte Ebene hinaus vorsteht. Mit anderen Worten schneidet eine mit der Linie 60 gekennzeichnete Ebene, die senkrecht zur Oberseite 8 entlang der Seitenfläche 10 verläuft, nicht die Verriegelungslippe 30.

Dadurch werden die aneinander anliegenden Oberflächen 22 bzw. 28 der Feder 24 bzw. der unteren Lippe 18 vergrößert und eine auf den Bereich der Seitenkanten 4 und 6 ausgeübte Kraft wird nicht direkt auf die Verriegelungselemente der horizontalen Verriegelung weitergeleitet.

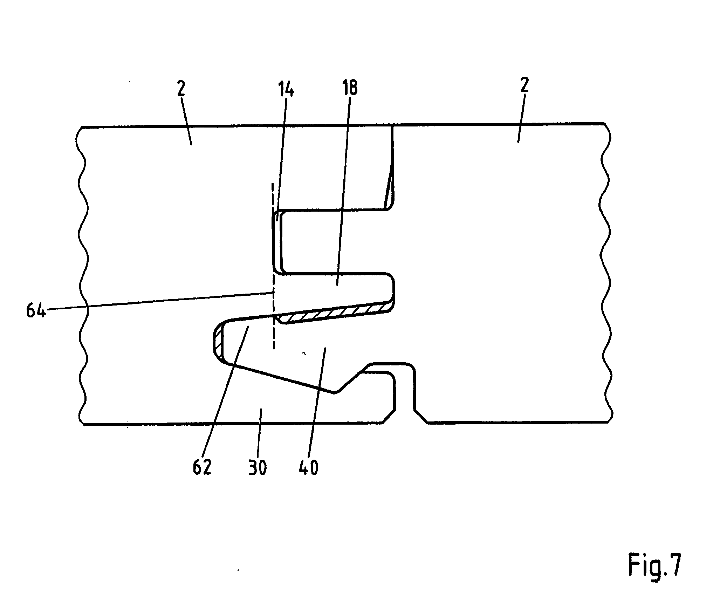

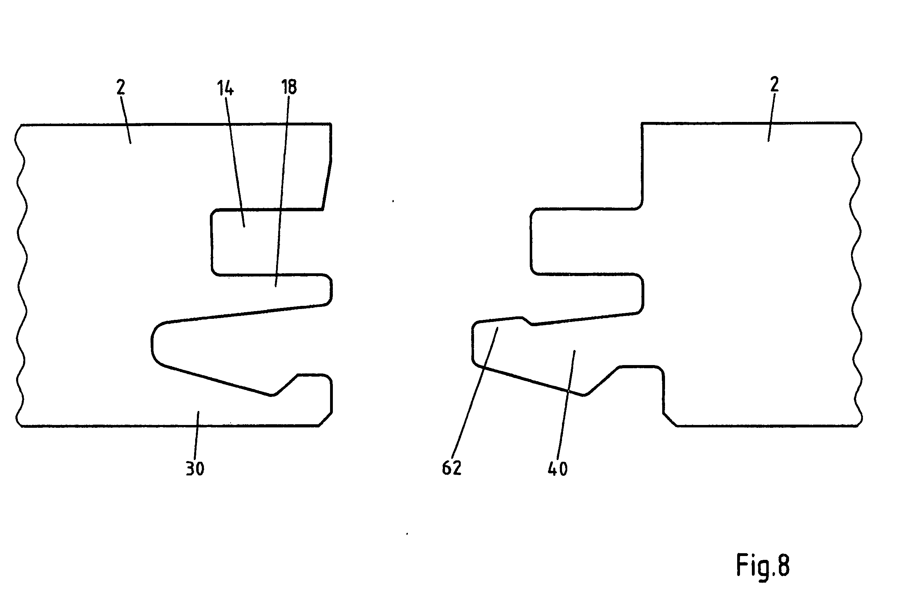

In den Fig. 7 und 8 ist schließlich ein viertes Ausführungsbeispiel der vorliegenden Erfindung dargestellt. Dabei sind gleiche Bezugszeichen für gleiche Bauteile verwendet worden.

Diese Ausführungsform unterscheidet sich vom ersten Ausführungsbeispiel durch eine leicht veränderte Form der Verriegelungsfeder 40. Denn das vordere Ende 62 der Verriegelungsfeder 40 weist eine vergrößerte äußere Form auf, die im verriegelten Zustand mit Passung an dem grundseitige Ende der zwischen der unteren Lippe 18 und der Verriegelungslippe 30 begrenzten Vertiefung anliegt. Dabei liegt das vordere Ende 62 der Verriegelungsfeder 40 nur in dem Bereich an, der im Material des Paneels 2 innerhalb des Grundes der Nut 14 angeordnet ist. Dieses ist durch die gestrichelte Linie 64 verdeutlicht worden.

## Patentansprüche

1. Paneel, insbesondere Fußbodenpaneel,
- mit einer ersten Seitenkante (4) und
- mit einer zweiten Seitenkante (6), die der ersten Seitenkante (4) gegenüberliegend angeordnet ist,
- wobei die Seitenkanten (4,6) mit korrespondierenden Seitenkanten (6,4) weiterer Paneelen (2) verriegelbar sind und
- wobei die Seitenkanten (4,6) obere, im wesentlichen senkrecht zur Oberseite (8) des Paneels (2) verlaufende Seitenflächen (10,12) aufweisen,
- mit einer an der ersten Seitenkante (4) ausgebildeten Nut (14), die von einer oberen Lippe (16) und einer unteren Lippe (18) begrenzt ist und sich parallel zur ersten Seitenkante (4) erstreckt, und
- mit einer an der zweiten Seitenkante (6) ausgebildeten Feder (24), die sich parallel zur zweiten Seitenkante (6) erstreckt,
- wobei im verriegelten Zustand die oberen Seitenflächen (10,12) aneinander anliegen und
- wobei im verriegelten Zustand die Unterseite (20) der oberen Lippe (16) an der Oberseite (26) der Feder (24) und die Oberseite (22) der unteren Lippe (18) an der Unterseite (28) der Feder (24) anliegen,
- wobei eine Verriegelungslippe (30) an der ersten Seitenkante (4) beabstandet zur unteren Lippe (18) vorgesehen ist, wobei die Verriegelungslippe (30) eine schräg zur Unterseite (32) des Paneels (2) verlaufende Verriegelungsfläche (34) aufweist,
- wobei eine Verriegelungsfeder (40) an der zweiten Seitenkante (6) beabstandet zur Feder (24) vorgesehen ist, wobei die Verriegelungsfeder (40) eine schräg zur Unterseite (32) des Paneels (2) verlaufende Verriegelungsfläche (42) aufweist,
- wobei im verriegelten Zustand die Verriegelungsfläche (34) der Verriegelungslippe (30) an der Verriegelungsfläche (42) der Verriegelungsfeder (40) anliegt **dadurch gekennzeichnet,**
- **dass** im verriegelten Zustand zwischen der Oberseite (46) der Verriegelungsfeder (40) und der Unterseite (23) der unteren Lippe (18) ein Zwischenraum (54) vorgesehen ist.

2. Paneel nach Anspruch 1,
**dadurch gekennzeichnet,**
**dass** im verriegelten Zustand zwischen dem distalen Ende (50) der Verriegelungsfeder (40) und dem Grund (52) der zwischen der unteren Lippe (18) der Nut (14) und der Verriegelungslippe (30) begrenzten Vertiefung ein Zwischenraum (54) vorgesehen ist.

3. Paneel nach Anspruch 1 oder 2,
**dadurch gekennzeichnet,**
**dass** sich das distale Ende der Verriegelungsfeder (40) über das distale Ende (52) der Feder (24) hinaus erstreckt.

4. Paneel nach einem der Ansprüche 1 bis 3,
**dadurch gekennzeichnet,**
**dass** am unteren Ende der oberen Seitenfläche (10) der ersten Seitenkante (4) eine vorstehende Rippe (56) vorgesehen ist, dass am unteren Ende der oberen Seitenfläche (12) der zweiten Seitenkante (6) eine Vertiefung (58) vorgesehen ist und dass im verriegelten Zustand die Rippe (56) mit der Vertiefung (58) im Eingriff steht.

5. Paneel nach einem der Ansprüche 1 bis 4,
**dadurch gekennzeichnet,**
**dass** im verriegelten Zustand der Grund (52) der zwischen der unteren Lippe (18) der Nut (14) und der Verriegelungslippe (30) begrenzten Vertiefung über die durch die obere Seitenfläche (10) der ersten Seitenkante (4) definierte senkrechte Ebene (60) hinaus vorsteht.

6. Paneel nach einem der Ansprüche 1 bis 5,
**dadurch gekennzeichnet,**
**dass** das vordere Ende (62) der Verriegelungsfeder (40) eine vergrößerte äußere Form aufweist, die im verriegelten Zustand mit Passung an dem grundseitige Ende der zwischen der unteren Lippe (18) und der Verriegelungslippe (30) begrenzten Vertiefung anliegt, wobei das vordere Ende der Verriegelungsfeder (40) nur in dem Bereich anliegt, der im Material des Paneels (2) innerhalb des Grundes der Nut (14) angeordnet ist.

## Claims

1. A panel, particularly a floor covering panel,
- having a first lateral edge (4) and
- having a second lateral edge (6), which is positioned opposite the first lateral edge (4),
- with the lateral edges (4, 6) being lockable with corresponding lateral edges (6, 4) of further panels (2) and
- with the lateral edges (4, 6) having upper lateral faces (10, 12) running essentially perpendicular to the top (8) of the panel (2),
- having a groove (14), implemented on the first lateral edge (4), which is delimited by an upper lip (16) and a lower lip (18) and which extends parallel to the first lateral edge (4), and
- having a tongue (24), implemented on the second lateral edge (6), which extends parallel to the second lateral edge (6),
- with the upper lateral faces (10, 12) abutting one another in the locked state and
- with, in the locked state, the bottom (20) of the upper lip (16) abutting on the top (26) of the tongue (24) and the top (22) of the lower lip (18) abutting on the bottom (28) of the tongue (24),
- having a locking lip (30) provided on the first lateral edge (4) at a distance to the lower lip (18), with the locking lip (30) having a locking face (34) running at a slant to the bottom (32) of the panel (2),
- having a locking tongue (40) provided on the second lateral edge (6) at a distance to the tongue (24), with the locking tongue (40) having a locking face (42) running at a slant to the bottom (32) of the panel (2),
- with in the locked state, the locking face (34) of the locking lip (30) abutted on the locking face (42) of the locking tongue (40),
**characterized in that**
- in the locked state, an interval (54) is provided between the top (46) of the locking tongue (40) and the bottom (23) of the lower lip (18) .

2. The panel according to Claim 1,
**characterized in that**,
in the locked state, an interval (54) is provided between the distal end (50) of the locking tongue (40) and the base (52) of the depression delimited between the lower lip (18) of the groove (14) and the locking lip (30) .

3. The panel according to Claim 1 or 2,
**characterized in that**
the distal end of the locking tongue (40) extends beyond the distal end (52) of the tongue (24).

4. The panel according to one of Claims 1 to 3,
**characterized in that**
a projecting rib (56) is provided on the lower end of the upper lateral face (10) of the first lateral edge (4), a depression (58) is provided on the lower end of the upper lateral face (12) of the second lateral edge (6), and the rib (56) is engaged with the depression (58) in the locked state.

5. The panel according to one of Claims 1 to 4,
**characterized in that**,
in the locked state, the base (52) of the depression delimited between the lower lip (18) of the groove (14) and the locking lip (30) projects beyond the perpendicular plane (60) defined by the upper lateral face (10) of the first lateral edge (4).

6. The panel according to one of Claims 1 to 5,
**characterized in that**
the forward end (62) of the locking tongue (40) has an enlarged outer shape, which, in the locked state, fits against the base-side end of the depression delimited between the lower lip (18) and the locking lip (30), with the forward end of the locking tongue (40) only abutted that region which is positioned in the material of the panel (2) within the base of the groove (14).

## Revendications

1. Panneau, en particulier panneau de revêtement de sol, comprenant :
- une première arête latérale (4) et
- une seconde arête latérale (6), étant agencée en face de la première arête latérale (4),
- dans lequel les arêtes latérales (4, 6) pouvant être verrouillées avec d'autres arêtes latérales correspondantes (6, 4) de panneaux supplémentaires (2) et
- dans lequel les arêtes latérales (4, 6) sont pourvues de surfaces latérales supérieures (10, 12), essentiellement dirigées vers la paroi supérieure (8) du panneau (2),
- une rainure (14) formée sur la première arête latérale (4), laquelle est limitée par une lèvre supérieure (16) et une lèvre inférieure (18), et s'étend parallèlement par rapport à la première arête latérale (4), et
- une languette (24) formée sur la seconde arête latérale (6), laquelle s'étend parallèlement par rapport à la seconde arête latérale (6),
- dans lequel, en position verrouillée, les surfaces latérales supérieures (10, 12) sont placées les unes le long des autres et
- dans lequel, en position verrouillée, la face inférieure (20) de la lèvre supérieure (16) est agencée sur la face supérieure (26) de la languette (24), et la face supérieure (22) de la lèvre inférieure (18) est agencée sur la face inférieure (28) de la languette (24),
- dans lequel une lèvre de verrouillage (30) sur la première arête latérale (4), espacée par rapport à la lèvre inférieure (18), est prévue, où la lèvre de verrouillage (30) est pourvue d'une surface de verrouillage (34) s'étendant de manière oblique par rapport à la face inférieure (32) du panneau (2),
- dans lequel une languette de verrouillage (40) est prévue sur la seconde arête latérale (6), de manière espacée par rapport à la languette (24), la languette de verrouillage (40) étant pourvue d'une surface de verrouillage (42) s'étendant de manière oblique par rapport à la face inférieure (32) du panneau (2),
- dans lequel, en position verrouillée, la surface de verrouillage (34) de la lèvre de verrouillage (30) est agencée sur la surface de verrouillage (42) de la languette de verrouillage (40),
**caractérisé en ce que**
- en position verrouillée, entre la surface supérieure (46) de la languette de verrouillage (40) et la surface inférieure (23) de la lèvre inférieure (18), un espace intermédiaire (54) est prévu.

2. Panneau selon la revendication 1,
**caractérisé en ce que**
en position verrouillée, entre l'extrémité distale (50) de la languette de verrouillage (40) et la base (52) du creux limité entre la lèvre inférieure (18) de la rainure (14) et de la lèvre de verrouillage (30), un espace intermédiaire (54) est prévu.

3. Panneau selon la revendication 1 ou 2,
**caractérisé en ce que**
l'extrémité distale de la languette de verrouillage (40) s'étend au-delà de l'extrémité distale (52) de la languette (24).

4. Panneau selon l'une des revendications 1 à 3,
**caractérisé en ce que**
au niveau de l'extrémité inférieure de la surface latérale supérieure (10) de la première arête latérale (4), une nervure saillante (56) est prévue, **en ce qu'**au niveau de l'extrémité inférieure de la surface latérale supérieure (12) de la seconde arête latérale (6), un creux (58) est prévu, et **en ce qu'**en position verrouillée, la nervure (56) est en prise avec le creux (58).

5. Panneau selon l'une des revendications 1 à 4,
**caractérisé en ce que**
en position verrouillée, la base (52) du creux limité entre la lèvre inférieure (18) de la rainure (14) et la lèvre de verrouillage (30), est en saillie au-dessus de l'étendue horizontale (60) définie par la surface latérale supérieure (10) de la première arête latérale (4).

6. Panneau selon l'une des revendications 1 à 5,
**caractérisé en ce que**
l'extrémité avant (62) de la languette de verrouillage (40) est pourvue d'une forme extérieure agrandie, laquelle, en position verrouillée, est agencée de façon à passer au niveau de l'extrémité de base du creux limité entre la lèvre inférieure (18) et la lèvre de verrouillage (30), où l'extrémité avant de la languette de verrouillage (40) est adjacente uniquement à la zone agencée dans le matériau du panneau (2) à l'intérieur de la base de la rainure (14).
